(19) Europäisches Patentamt
European Patent Office
Office européen des brevets

(11) **EP 1 672 358 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(51) Int Cl.:
*G01N 23/201* (2006.01)   *G01V 5/00* (2006.01)

(21) Anmeldenummer: **05027668.2**

(22) Anmeldetag: **16.12.2005**

(54) **Anordnung zum Messen des Impulsübertragungsspektrums von elastisch gestreuten Röntgenquanten sowie Verfahren zur Bestimmung dieses Impulsübertragungsspektrums**

Arrangement for the measurement of the pulse transfer spectrum of quanta of elastically diffracted x-rays and method for determining said pulse transfer spectrum

Dispositif pour mesurer le spectre de transfert d'impulsions de quanta de rayons X diffractés élastiquement ainsi qu'une méthode pour déterminer ce spectre de transfert d'impulsions

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.12.2004 DE 102004060610**

(43) Veröffentlichungstag der Anmeldung:
**21.06.2006 Patentblatt 2006/25**

(73) Patentinhaber: **Morpho Detection, Inc.**
**Newark, CA 94560 (US)**

(72) Erfinder: **Harding, Geoffrey, Dr.**
**22547 Hamburg (DE)**

(74) Vertreter: **DTS München**
**St.-Anna-Strasse 15**
**80538 München (DE)**

(56) Entgegenhaltungen:
**EP-A- 1 347 287    US-A1- 2003 031 295**

**Beschreibung**

Die Erfindung befasst sich mit einer Anordnung zum Messen des Impulsübertragungsspektrums von elastisch gestreuten Röntgenquanten sowie mit einem Verfahren zur Bestimmung des in der Anordnung gemessenen Impulsübertragungsspektrums.

Aus der EP 1 241 470 B1 ist eine solche Anordnung zur Untersuchung von Gepäckstücken bekannt. Eine solche Anordnung weist einen in Y-Richtung ausgedehnten Fokus auf, der Röntgenstrahlung in X-Richtung emittiert. Durch einen sich in Y-Richtung erstreckenden Primärkollimator werden nur Röntgenquanten in einen dahinter liegenden Untersuchungsbereich durchgelassen, die auf einzigen Fokalpunkt gerichtet sind. Der Fokalpunkt bildet dabei den Ursprungspunkt eines kartesischen Koordinatensystems. Es wird somit ein scheibenförmiger inverser Fächerstrahl gebildet. Zwischen dem Fokalpunkt und dem Untersuchungsbereich ist ein Streukollimator angeordnet, der ringförmig um die Z-Richtung ausgebildet ist. Dadurch wird erreicht, dass nur Streustrahlung von einem in dem Untersuchungsbereich befindlichen Objekt durchgelassen wird, die unter einem festen vorgegebenen Streuwinkel vom Streuvoxel ausgeht. In der YZ-Ebene ist ein Detektor angeordnet, der sich entlang der Z-Achse erstreckt. Dadurch wird die Tiefeninformation des Streuvoxels, also seine X-Koordinate, auf eine Parallele zur Y-Achse in der YZ-Ebene abgebildet. Mittels einer solchen Anordnung kann eine schnelle Analyse eines Gepäckstücks erreicht werden, wobei lediglich eine eindimensionale Bewegung des Gepäckstücks entlang der Z-Richtung auf einem Förderband erfolgen muss. Die Scangeschwindigkeit ist allerdings durch die winkelabhängige Empfindlichkeit der Detektorelemente beschränkt.

Ferner offenbart die EP-A-1 347 287 eine Vorrichtung gemäß dem Oberbegriff Anspruchs 1.

Aufgabe der Erfindung ist es, eine Anordnung sowie ein Verfahren zur Verfügung zu stellen, die eine noch höhere Scangeschwindigkeit eines Objekts ermöglichen. Eine weitere Aufgabe der Erfindung ist es, eine geringere Bauhöhe der Anordnung zu ermöglichen.

Die Aufgabe wird durch eine Anordnung mit den Merkmalen des Patentanspruchs 1 gelöst. Dadurch, dass der Detektor als ein zweidimensionaler Pixel-Detektor ausgebildet ist, können Streuquanten nicht nur entlang der Z-Achse erfasst werden, sondern ortsaufgelöst über einen größeren Raumwinkel. Unter einem Pixel-Detektor (Englisch "pixellated detector") wird in dieser Anmeldung ein Detektorarray verstanden, das einzelne Detektorelemente aufweist, die unabhängig voneinander die auftreffende Streustrahlung erfassen. Dabei kann es sich sowohl um einen Einkristall handeln als auch um mehrere räumlich getrennte Detektorelemente. Es kann jedes einzelne Detektorelement einen Read-Out-Chip aufweisen; solche Pixel-Detektoren werden im Bereich der Medizin verwendet. Durch das Erfassen von Streuquanten, die auch neben der Z-Achse auf den Detektor auftreffen, kann ein größerer Raumwinkel abgedeckt werden und das Signal-Rausch-Verhältnis wird erhöht bzw. es wird nur eine geringere Scanzeit für das Objekt benötigt, als dies mit einer Anordnung gemäß dem oben zitierten Stand der Technik möglich ist.

Eine vorteilhafte Weiterbildung der Erfindung sieht vor, dass jedes einzelne Detektorelement separat auslesbar ist. Damit wird der Abbildungsgeometrie der Anordnung Rechnung getragen, da die Streuquanten, die von einer elastischen Streuung herrühren, nicht auf einer Geraden senkrecht zur Z-Achse in der YZ-Ebene verlaufen, sondern für größere Abstände von der Z-Achse sich auf einer elliptischen Kurve zur Y-Achse hin bewegen. Somit können immer genau die Detektorelemente ausgelesen werden, die vom selben Streuvoxel herrühren. Außerdem kann durch die Anordnung als Detektorarray dem weiteren Effekt Rechnung getragen werden, dass die Form der Ellipse, auf der die zu einem Streuvoxel gehörenden elastisch gestreuten Röntgenquanten den Detektor treffen, auch vom Winkel des Primärstrahls zur X-Achse (Primärstrahlwinkel) abhängt. Dadurch wird gewährleistet, dass immer eine scharfe Bestimmung des Impulsübertragungsspektrums für jedes einzelne Streuvoxel möglich ist, egal an welcher Stelle es sich im Objekt befindet und somit unabhängig vom Primärstrahlwinkel.

Eine weitere vorteilhafte Weiterbildung der Erfindung sieht vor, dass die Detektorelemente aus CdZn-Te bestehen. Solche Detektorelemente können entweder mit einer geringen Kühlung oder sogar bei Raumtemperatur betrieben werden.

Eine weitere vorteilhafte Weiterbildung der Erfindung sieht vor, dass die Länge des ausgedehnten Fokus in Y-Richtung und der einzige Fokalpunkt so aufeinander abgestimmt sind, dass ein Öffnungswinkel des Röntgenstrahls am Fokalpunkt von 60° bis 120°, bevorzugt von 90°, gegeben ist. Dadurch wird der Winkel, der vom Primärstrahl überstrichen wird und der die maximale Größe des Querschnitts des zu untersuchenden Objekts bestimmt, da er dieses vollständig abdecken muss, erheblich gegenüber dem Stand der Technik erhöht. Reguläre Objekte, beispielsweise Koffer bei der Sicherheitsüberprüfung an Flughäfen, können somit in einer gegenüber dem zitierten Stand der Technik flacher gebauten Anordnung in derselben Zeit überprüft werden.

Die Aufgabe wird auch durch ein Verfahren mit den Merkmalen des Patentanspruchs 5 gelöst. Da die Abbildungsgeometrie der Anordnung bekannt ist, können die Messergebnisse in den einzelnen Detektorelementen in Abhängigkeit zu jedem einzelnen Streuvoxel im Objekt, von dem die detektierten elastisch gestreuten Röntgenquanten herrühren, korrigiert werden. Durch die zusätzliche Korrektur der Messwerte in den einzelnen Detektoren in Abhängigkeit des Primärstrahlwinkels ist es möglich, auch für Streuvoxel, die sehr weit entfernt von der X-Achse liegen, die Impulsübertragungsfunktion ohne Verwischeffekte aufzunehmen, da die Qualität der Beugungsprofile nicht geringer wird.

Weitere vorteilhafte Weiterbildungen der Erfindung sind Gegenstand der Unteransprüche. Eine vorteilhafte Ausgestaltung der Erfindung wird anhand des in den Figuren dargestellten Ausführungsbeispiels erläutert. Hierbei zeigen:

Fig. 1 eine schematische Ansicht einer erfindungsgemäßen Anordnung ohne Streukollimator und

Fig. 2 das Verhältnis des relativen Fehlers im Streuwinkel im Verhältnis zum Primärstrahlwinkel

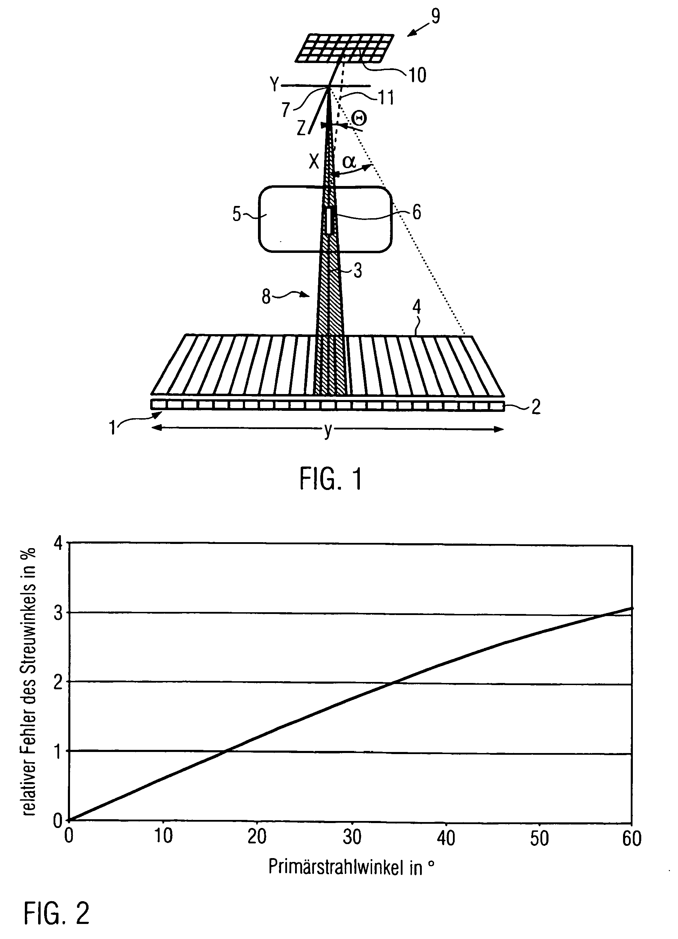

In Fig. 1 ist schematisch ein Ausführungsbeispiel einer erfindungsgemäßen Anordnung dargestellt. Es handelt sich hierbei um einen Schnitt entlang der XY-Ebene. Allerdings ist die erfindungsgemäße Anordnung im oberen Bereich, d.h. im Bereich der YZ-Ebene, perspektivisch dargestellt.

Die erfindungsgemäße Anordnung weist eine sich in Y-Richtung erstreckende Anode 1 auf, die eine Reihe von aneinander gereihten diskreten Fokuspunkten 2 aufweist, die beim Beschuss mit einem Elektronenstrahl entlang der Anode 1 wandern. Bevorzugt wird dabei eine Anzahl von Fokuspunkten 2 im Bereich von 60 (dargestellt sind aus Gründen der Übersichtlichkeit lediglich eine geringe Anzahl dieser Fokuspunkte 2). Die von jedem einzelnen Fokuspunkt 2 ausgehenden Röntgenquanten werden durch einen Primärkollimator 4, der eine Fächerform aufweist, so begrenzt, dass sich ein inverser Fächerstrahl 8 an Röntgenquanten als Primärstrahl 3 ergibt. Dieser inverse Fächerstrahl 8 verläuft in der XY-Ebene und konvergiert auf einen einzigen Fokalpunkt 7, der gleichzeitig den Koordinatenursprung eines kartesischen Koordinatensystems bildet. Der Primärstrahl 3 trifft im Objektraum auf ein Objekt 5. Bei dem Objekt 5 handelt es sich, wenn man vom häufigsten Anwendungsfall der erfindungsgemäßen Anordnung in Form einer Gepäckprüfanlage ausgeht, um einen Koffer. Dieses Objekt 5 liegt dann auf einem Förderband (nicht gezeigt), welches sich entlang der Z-Achse bewegen lässt. Solange das Objekt 5 nicht entlang der Z-Achse durch das Förderband bewegt wird, durchsetzt der inverse Fächerstrahl 8 das Objekt 5 entlang einer dünnen Scheibe in der XY-Ebene. Diese Scheibe wird dadurch verändert, dass eine eindimensionale Bewegung des Förderbands in Z-Richtung erfolgt, so dass ein vollständiger Scanvorgang des Objekts 5 durch die Bewegung des Förderbands erfolgen kann.

Die momentan gescannte dünne Scheibe besteht aus einer Anzahl von Streuvoxeln 6, die jeweils eine X-Koordinate (unterschiedliche Tiefe entlang der X-Richtung) und eine Y-Koordinate (unterschiedliche seitliche Anordnung bezüglich der X-Achse) aufweisen. An jedem einzelnen Streuvoxel 6 wird der Primärstrahl 3 von Röntgenquanten gestreut. Von den an diesem Streuvoxel 6 gestreuten Röntgenquanten interessieren im Rahmen der vorliegenden Erfindung lediglich die kohärent gestreuten Röntgenquanten. Diese werden mittels eines nicht dargestellten - aus der EP 1 241 470 B1 bekannten - Streukollimators in die YZ-Ebene abgebildet, so dass aus ihrer Position entlang der Z-Achse eine direkte Zuordnung zur Tiefe entlang der X-Richtung im Objekt 5 erfolgt. Dies bedeutet, dass als Streustrahl 11 lediglich solche am Streuvoxel 6 gestreuten Röntgenquanten vom Streukollimator durchgelassen werden, die einen vorgegebenen konstanten Streuwinkel Θ aufweisen. Der durchgelassene Streustrahl 11 ist in Fig. 1 gestrichelt dargestellt.

Auf Grund des um die Z-Richtung ringförmig ausgebildeten Streukollimators gelangen nicht nur Streuquanten in der XZ-Ebene durch diesen hindurch sondern auch solche, die eine von Y=0 verschiedene Koordinate aufweisen. Diese werden von einem in der YZ-Ebene angeordneten zweidimensionalen Detektor 9 erfasst. Die aus der EP 1 241 470 B1 bekannte Detektoranordnung erstreckt sich lediglich entlang der Z-Achse, dagegen erstrecken sich die einzelnen erfindungsgemäßen Detektorelemente 10 in Y-Richtung. Dadurch können mehr Streuquanten des vom Streuvoxel 6 stammenden Streustrahls 11, die durch den Streukollimator durchgelassen werden und zu dem festen Streuwinkel Θ gehören, vom Detektor 9 erfasst werden. Je mehr Streuquanten erfasst werden, desto weniger Zeit wird benötigt, um das Impulsübertragungsspektrum der elastisch gestreuten Röntgenquanten aufzunehmen.

Bei dem Detektor 9 handelt es sich um ein Detektorarray, das in der YZ-Ebene angeordnet ist. Der Detektor 9 ist dabei von der Y-Achse entfernt angeordnet. Die Entfernung ist so gewählt, dass die vom Streuvoxel 6 herrührenden Streustrahlen 11 unter einem Streuwinkel Θ, der unter 10° liegt, auf ihn treffen. Dieser enge Vorwärtswinkel in der elastischen Streuung wird verwendet, da für die in Frage kommenden Sprengstoffe die Impulsübertragungsfunktion genau in diesem Bereich einen starken Peak aufweist, der zu größeren Streuwinkeln stark abnimmt. Der Detektor 9 ist aus einer Vielzahl einzelner Detektorelemente zu einem Detektorarray zusammengesetzt. Jedes einzelne Detektorelement 10 ist einzeln auslesbar und energieauflösend. Damit kann die Impulsübertragungsfunktion für jedes einzelne Streuvoxel 6, egal in welcher Tiefe - das bedeutet, welche X-Koordinate es aufweist - es sich im Objekt 5 befindet, auch entlang der Y-Richtung zugeordnet werden. Dadurch wird ein größerer Raumwinkel erhalten, für den die zu dem jeweiligen Streuvoxel 6 gehörigen elastisch gestreuten Röntgenquanten detektiert werden können. Dadurch werden mehr Streuquanten 11 detektiert als dies der Fall wäre, wenn nur Detektorelemente 10 entlang der Z-Achse angeordnet wären. Dadurch ergibt sich entweder eine bessere Auflösung auf Grund des gesteigerten Signal-Rausch-Verhältnisses oder bei gegenüber dem Stand der Technik gleichbleibendem Signal-Rausch-Verhältnis eine bedeutend verkürzte Scanzeit des Objekts 5. Auf Grund der Abbildungsgeometrie verlaufen die einem Streuvoxel 6 zugeordneten Detektorelemente 10 auf einer Ellipsenbahn, die symmetrisch zur Z-Achse verläuft und sich mit steigendem Abstand von der Z-Achse zur Y-Achse orientiert.

Allerdings ist die Form der Ellipse nicht nur von der Tiefe des Streuvoxels 6 innerhalb des Objekts 5, d.h. von seiner X-Koordinate, abhängig, sondern auch davon, unter welchem Primärstrahlwinkel $\alpha$ zur X-Achse sich das Streuvoxel 6 befindet. Auf Grund der Beziehung zwischen dem Beugungsprofil, das durch den Impulsübertrag x definiert wird und dem Energiespektrum ergibt sich die Gleichung:

$$x = \frac{\sin(\Theta/2)}{\lambda}$$

Der Streuwinkel $\Theta$ setzt sich dabei aus zwei Komponenten zusammen, der eine mit einem Z-Anteil und der andere mit einem Y-Anteil. Auf Grund bekannter trigonometrischer Funktionen ergibt sich, dass der Wert des Impulsübertrags x auch abhängig ist von dem Primärstrahlwinkel $\alpha$, der das Streuvoxel 6 trifft.

Die Beziehung zwischen dem relativen Fehler bezüglich des Streuwinkels ist als Ordinate in Fig. 2 in Prozent über den Primärstrahlwinkel $\alpha$ in Grad aufgetragen. Man erkennt gut, wie sich der relative Fehler von 0 % bei einem Primärstrahlwinkel $\alpha$ von 0° bis zu über 3 % bei einem Primärstrahlwinkel $\alpha$ von 60° ansteigt. Anhand dieser Abhängigkeit kann für alle Primärstrahlwinkel $\alpha$, sogar für so große Primärstrahlwinkel $\alpha$ von 60°, eine exakte Korrektur vorgenommen werden, so dass kein Verwischeffekt bei der Bestimmung des Impulsübertragungsspektrums für die elastisch gestreuten Röntgenquanten von jedem einzelnen Streuvoxel 6 gegeben ist.

Auf Grund der Möglichkeit, den Primärstrahlwinkel $\alpha$ sehr groß zu wählen, kann ein sehr großer Öffnungswinkel des inversen Fächerstrahls 8, von dem ein Teil in Fig. 1 schraffiert dargestellt ist, erzielt werden. Durch die erfindungsgemäße Anordnung ist es problemlos möglich, einen Öffnungswinkel von 90° zu bekommen. Dies bedeutet, dass der Abstand zwischen Fokalpunkt 7 und Anode 1 gegenüber einer aus dem Stand der Technik bekannten Anordnung mit kleinerem Öffnungswinkel des inversen Fächerstrahls 8 geringer sein kann und trotzdem ein Objekt 5 derselben Querschnittsfläche gescannt werden kann. Dies ist ganz entscheidend dafür, dass ein solches System besser in die Logistikkette, beispielsweise eines Flughafens, eingebaut werden kann. So ist es für die Überprüfung von Handgepäck ausreichend, wenn die Gesamthöhe der Anordnung nur 1,5 m beträgt.

Die einzelnen Detektorelemente 10 des Detektorarrays sind bevorzugt aus CdZnTe hergestellt, da diese sehr gut die Energie auflösen und darüber hinaus auch bei Raumtemperatur oder geringer Kühlung (Peltierkühlung) betrieben werden können.

Bezugszeichenliste

| | |
|---|---|
| 1 | Anode |
| 2 | Fokuspunkt |
| 3 | Primärstrahl |
| 4 | Primärkollimator |
| 5 | Objekt |
| 6 | Streuvoxel |
| 7 | Fokalpunkt |
| 8 | inverser Fächerstrahl |
| 9 | Detektor |
| 10 | Detektorelement |
| 11 | Streustrahl, Streuquanten |
| $\Theta$ | Streuwinkel |
| $\alpha$ | Primärstrahlwinkel |

**Patentansprüche**

1. Anordnung zum Messen des Impulsübertragungsspektrums von elastisch gestreuten Röntgenquanten

   mit einem in Y-Richtung ausgedehnten Fokus als Anode (1), der Röntgenstrahlung in X-Richtung emittiert;

   mit einem in Y-Richtung sich erstreckenden Primärkollimator (4), der nur Röntgenstrahlung durchlässt, die auf einen einzigen Fokalpunkt (7) gerichtet ist und der Fokalpunkt (7) Ursprungspunkt eines kartesischen Koordinatensystems ist;

   mit einem Untersuchungsbereich;

   mit einem Streukollimator, der zwischen dem Untersuchungsbereich und dem Fokalpunkt (7) angeordnet ist und der nur Streustrahlung (11) von einem in den Untersuchungsbereich einbringbaren Objekt (5) durchlässt, die unter einem festen Streuwinkel ($\Theta$) emittiert wird;

   und mit einem Detektor (9), der als ein zweidimensionaler Pixel-Detektor ausgebildet ist , und der aus einer Vielzahl von energieauflösenden Detektorelementen (10) besteht; wobei die X-Komponente eines Streuvoxels (6) des Objekts (5) eindeutig auf die Z-Komponente des Detektors (9) abgebildet wird;
   **dadurch gekennzeichnet, dass** sich der Detektor (9) in der YZ-Ebene befindet, also in der Ebene, die den Fokalpunkt (7) enthält,
   und einen Abstand zur Y-Achse aufweist.

2. Anordnung nach Anspruch 1, **dadurch gekennzeichnet, dass** jedes einzelne Detektorelement (10) separat auslesbar ist.

3. Anordnung nach einem der Ansprüche 1 oder 2, **dadurch gekennzeichnet, dass** die Detektorelemente (10) aus CdZnTe bestehen.

**4.** Anordnung nach einem der vorhergehenden Ansprüche, **dadurch gekennzeichnet, dass** die Länge des ausgedehnten Fokus in Y-Richtung und der einzige Fokalpunkt (7) so aufeinander abgestimmt sind, dass ein Öffnungswinkel des Röntgenstrahls am Fokalpunkt (7) von 60° bis 120°, bevorzugt von 90°, gegeben ist.

**5.** Verfahren zur Bestimmung des in der Anordnung nach einem der vorstehenden Ansprüche gemessenen Impulsübertragungsspektrums, wobei die Messwerte der Detektorelemente (10) in Abhängigkeit vom Streuwinkel ($\Theta$) korrigiert werden, der wiederum in Abhängigkeit vom Primärstrahlwinkel ($\alpha$) sowie der Lage des Detektorelements (10) zum Streuvoxel (6) korrigiert wird.

## Claims

**1.** Arrangement for measuring the momentum transfer spectrum of elastically scattered X-ray quanta with, as anode (1), a focus extended in Y-direction which emits X-radiation in X-direction; with a primary collimator (4) extending in Y-direction which allows through only X-radiation which is aimed at a single isocentre (7) and the isocentre (7) is the originating point of a cartesian coordinates system; with an examination area; with a scatter collimator which is arranged between the examination area and the isocentre (7) and which allows through only scattered radiation (11), from an object (5) that can be introduced in the examination area, which is emitted at a fixed angle of scatter ($\Theta$); and with a detector (9) which is developed as a two-dimensional pixelated detector and which consists of a plurality of energy-resolving detector elements (10); the X-component of a scatter voxel (6) of the object (5) being unambiguously imaged onto the Z-component of the detector (9); **characterized in that** the detector (9) is located in the Y-Z plane, thus in the plane which contains the isocentre (7), and is distanced from the Y-axis.

**2.** Arrangement according to claim 1, **characterized in that** each individual detector element (10) can be readout separately.

**3.** Arrangement according to one of claims 1 or 2, **characterized in that** the detector elements (10) consist of CdZnTe.

**4.** Arrangement according to one of the previous claims, **characterized in that** the length of the extended focus in Y-direction and the single isocentre (7) are matched to each other such that there is an opening angle of the X-ray beam of 60° to 120°, preferably of 90°, at the isocentre (7).

**5.** Method of determining the momentum transfer spectrum measured in the arrangement according to one of the previous claims, the measurement values of the detector elements (10) being corrected depending on the angle of scatter ($\Theta$) which in turn is corrected depending on the primary beam emission angle ($\alpha$) and on the position of the detector element (10) relative to the scatter voxel (6).

## Revendications

**1.** Dispositif pour mesurer le spectre de transfert d'impulsions de quanta de rayons X diffractés élastiquement avec un foyer s'étendant dans la direction Y sous la forme d'une anode (1) émettant le rayonnement X dans la direction X ; avec un collimateur principal (4) s'étendant dans la direction Y ne laissant passer que le rayonnement X orienté sur un seul point focal (7) et le point focal (7) étant le point d'origine d'un système de coordonnées cartésien ; avec une zone d'examen ; avec un collimateur de diffraction disposé entre la zone d'examen et le point focal (7) et ne laissant passer que le rayonnement diffracté (11) d'un objet (5) pouvant être placé dans la zone d'examen et émis selon un angle de diffraction ($\Theta$) fixe ; et avec un détecteur (9) prenant la forme d'un détecteur de pixels en deux dimensions et consistant en une pluralité d'éléments de détecteur (10) libérant de l'énergie ; les composantes X d'un voxel de diffraction (6) de l'objet (5) étant réalisées sans ambigüité sur la composante Z du détecteur (9) ; **caractérisé en ce que** :

le détecteur (9) se trouve dans le Plan YZ, donc dans le plan contenant le point focal (7) ; et il présente une certaine distance par rapport à l'axe Y.

**2.** Dispositif selon la revendication 1, **caractérisé en ce que** chaque élément de détecteur (10) peut être sélectionné séparément.

**3.** Dispositif selon l'une quelconque des revendications 1 ou 2, **caractérisé en ce que** les éléments de détecteur (10) sont en CdZnTe.

**4.** Dispositif selon l'une quelconque des revendications précédentes, **caractérisé en ce que** la longueur du foyer s'étendant dans la direction Y et le point focal (7) unique sont harmonisés de telle sorte l'un par rapport à l'autre qu'un angle d'ouverture du rayon X au niveau du point focal (7) est compris entre 60° et 120°, de préférence de 90°.

5. Procédé pour déterminer le spectre de transfert d'impulsions mesuré dans le dispositif selon l'une quelconque des revendications précédentes, les valeurs mesurées des éléments de détecteur (10) étant corrigées en fonction de l'angle de rayonnement principal ($\alpha$) ainsi que de la position de l'élément de détecteur (10) par rapport au voxel de diffraction (6) et de l'angle de diffraction ($\Theta$) en résultant.

FIG. 1

FIG. 2

EP 1 672 358 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1241470 B1

- EP 1347287 A